# EUROPEAN PATENT SPECIFICATION

(11) **EP 3 915 878 B1**
(45) Date of publication and mention of the grant of the patent: **19.04.2023**
(21) Application number: 21176483.2
(22) Date of filing: 28.05.2021
(51) Int. Cl.: B64D 11/04, B64D 11/06, B64D 11/00

(54) **AIRCRAFT INTERIOR STRUCTURE INCLUDING A FOOTWELL AND AN INTEGRATED GALLEY**
INNENSTRUKTUR EINES FLUGZEUGES MIT FUSSRAUM UND INTEGRIERTER BORDKÜCHE
STRUCTURE INTÉRIEURE D'AÉRONEF COMPRENANT UN ESPACE DE PIEDS ET UNE CUISINETTE INTÉGRÉE

(30) Priority: 29.05.2020 US 202016888632
(43) Date of publication of application: 01.12.2021
(73) Proprietor: B/E Aerospace, Inc., Winston-Salem, NC 27105 (US)
(72) Inventor: DOWTY, Mark B., Rural Hall, 27045 (US); MOE, Daniel N., Mukilteo, 98275 (US)
(74) Representative: Dehns

(56) References cited:
- US-A1- 2007 241 232
- US-A1- 2013 320 724
- US-A1- 2015 367 942

## Description

### BACKGROUND

Aircraft cabin designs may include aircraft interior structures that are separately-constructed and separately-installed within the aircraft cabin. The separate nature of the aircraft interior structures may result in a loss of valuable space (e.g., floor space, stowage space, or the like) within the aircraft cabin. US 2007/241232 A1 discloses an aircraft interior structure having a galley section, a passenger seating section, and a footwell partially inserted within the galley cart section. US 2015/367942 A1 and US 2013/320724 A1 each discloses another aircraft interior structure.

### SUMMARY

According to a first aspect, an aircraft interior structure according to claim 1 is provided.

In some embodiments, the one or more galley carts may include a full-size galley cart. The at least one galley cart cavity may have the reduced depth configured to receive the full-size galley cart.

In some embodiments, the footwell may be configured to fit in a space within the galley section at least partially defined by the depth configured to receive the full-size galley cart.

In some embodiments, the one or more galley carts may include a reduced-size galley cart. The at least one galley cart cavity may have the reduced depth configured to receive the reduced-size galley cart.

In some embodiments, the footwell may be configured to fit in a space within the galley section at least partially defined by the depth configured to receive the reduced-size galley cart.

In some embodiments, the one or more galley carts may include a full-size galley cart and a reduced-size galley cart. The at least one galley cart cavity may include a first section having a depth configured to receive the full-size galley cart and a second section having a depth configured to receive the reduced-size galley cart.

In some embodiments, the footwell may be configured to fit in a space within the galley section at least partially defined by the first section having the depth configured to receive the full-size galley cart and the second section having the depth configured to receive the reduced-size galley cart.

In some embodiments, the galley section may further include a galley insert portion. The galley insert portion may include at least one galley insert cavity configured to receive one or more galley inserts. The galley insert portion may be accessible from the floor area of the aircraft cabin.

In some embodiments, the passenger seating section may include an ottoman within the footwell. The ottoman may correspond to the aircraft seat within the passenger compartment. The ottoman and the aircraft seat may be configured to form the bed surface when the aircraft seat is in the lie-flat position.

In some embodiments, the floor area may include an aircraft aisle.

In some embodiments, the aircraft seat may be parallel to the aircraft aisle.

In some embodiments, the aircraft seat may be set at an angle relative to the aircraft aisle.

In some embodiments, the aircraft interior structure may further include a plurality of support structures. The plurality of support structures may be configured to define at least one of the galley section or the passenger seating section. The footwell may be proximate to the aircraft aisle and at least one exterior support structure of the plurality of support structures.

In some embodiments, the footwell may be arranged in a center position within the passenger seating section of the aircraft interior structure.

[deleted]

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a perspective view of an aircraft cabin including a set of passenger compartments and an aircraft interior structure with a footwell and an integrated galley, in accordance with one or more embodiments of the disclosure;
FIG. 2 illustrates a perspective view of an aircraft interior structure including a footwell and an integrated galley, in accordance with one or more embodiments of the disclosure;
FIG. 3 illustrates a perspective view of an aircraft interior structure including a footwell and an integrated galley, in accordance with one or more embodiments of the disclosure;
FIG. 4 illustrates a perspective view of an aircraft interior structure including a footwell and an integrated galley, in accordance with one or more embodiments of the disclosure;
FIG. 5 illustrates a perspective view of an aircraft interior structure including a footwell and an integrated galley, in accordance with one or more embodiments of the disclosure;
FIG. 6 illustrates a perspective view of an aircraft cabin including a set of passenger compartments and an aircraft interior structure with a footwell and an integrated galley, in accordance with one or more embodiments of the disclosure;
FIG. 7 illustrates a perspective view of an aircraft interior structure including a footwell and an integrated galley, in accordance with one or more embodiments of the disclosure;
FIG. 8 illustrates a perspective view of an aircraft interior structure including a footwell and an integrated galley, in accordance with one or more embodiments of the disclosure;
FIG. 9 illustrates a perspective view of an aircraft interior structure including an integrated galley, in accordance with one or more embodiments of the disclosure;
FIG. 10 illustrates a partial perspective view of an aircraft interior structure including an integrated galley, in accordance with one or more embodiments of the disclosure;
FIG. 11 illustrates a perspective view of an auxiliary aircraft interior structure including a footwell portion, in accordance with one or more embodiments of the disclosure;
FIG. 12 illustrates a perspective schematic of an aircraft cabin including a set of passenger compartments and an aircraft interior structure with a footwell and an integrated galley, in accordance with one or more embodiments of the disclosure;
FIG. 13 illustrates a plan schematic of an aircraft cabin including a set of passenger compartments and an aircraft interior structure with a footwell and an integrated galley, in accordance with one or more embodiments of the disclosure; and
FIG. 14 illustrates a plan schematic of an aircraft cabin including a set of passenger compartments and an aircraft interior structure with a footwell and an integrated galley, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

[deleted]

[deleted]

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, along with any other features which may not necessarily be expressly described or inherently present in the instant disclosure.

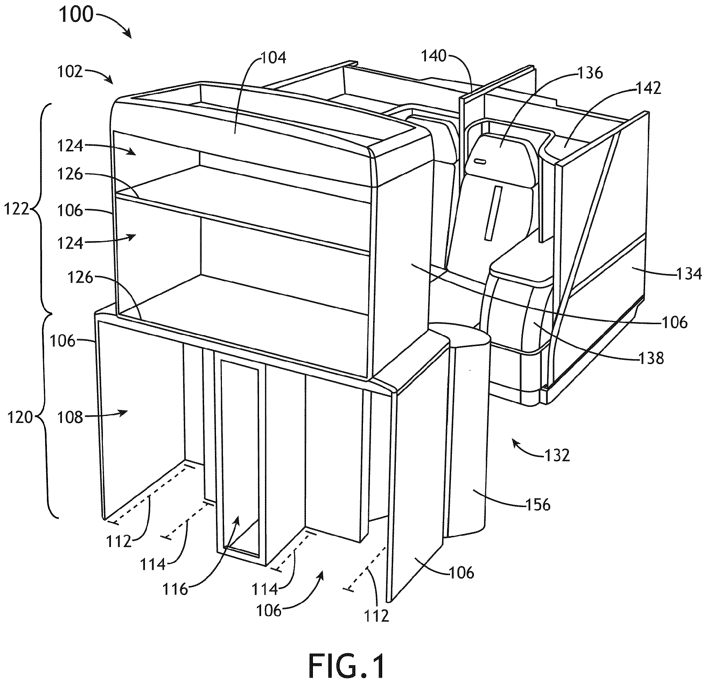

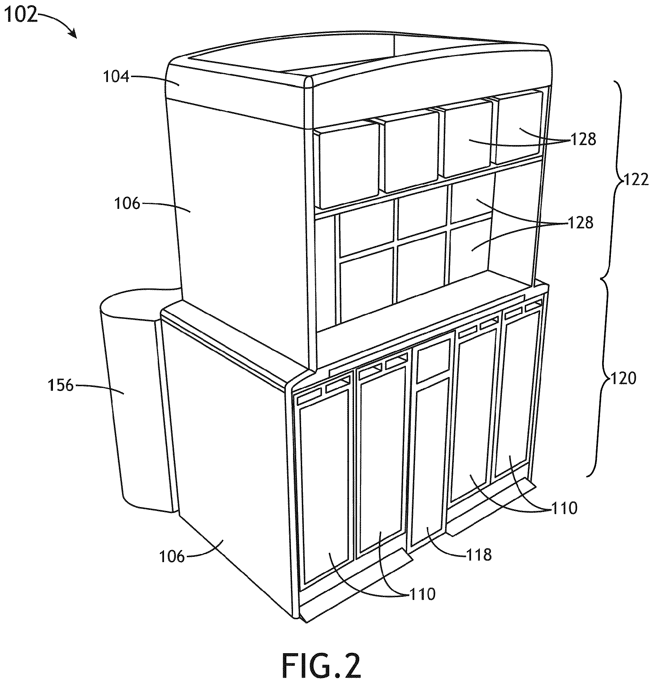

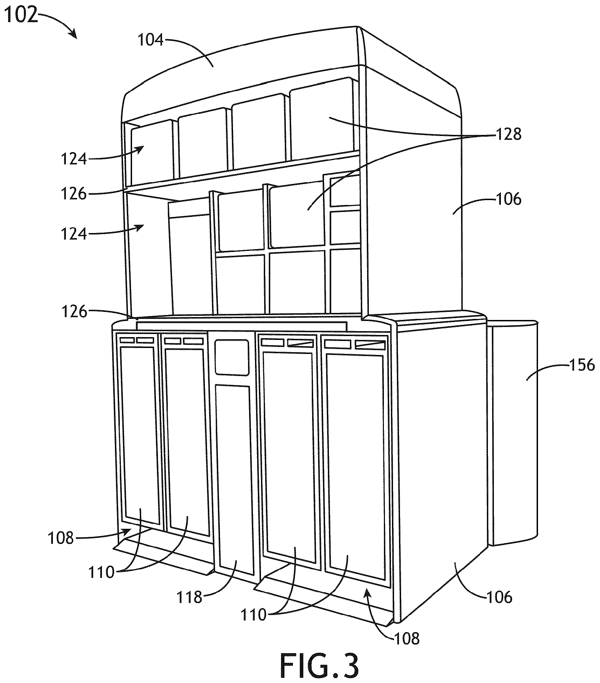

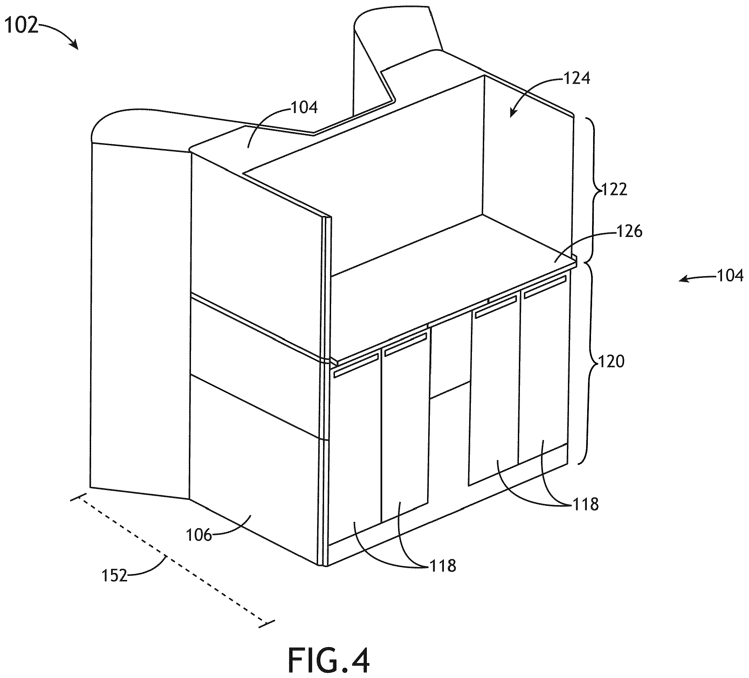

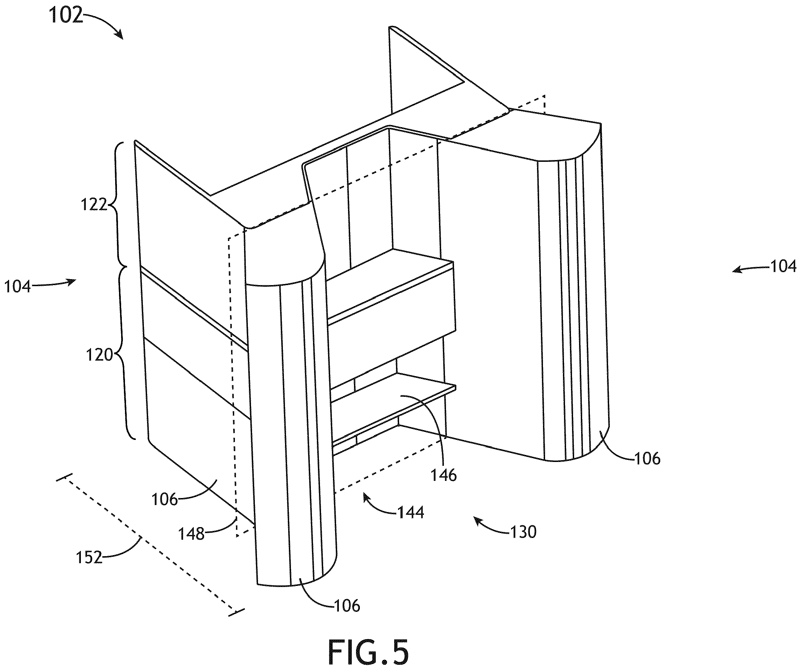

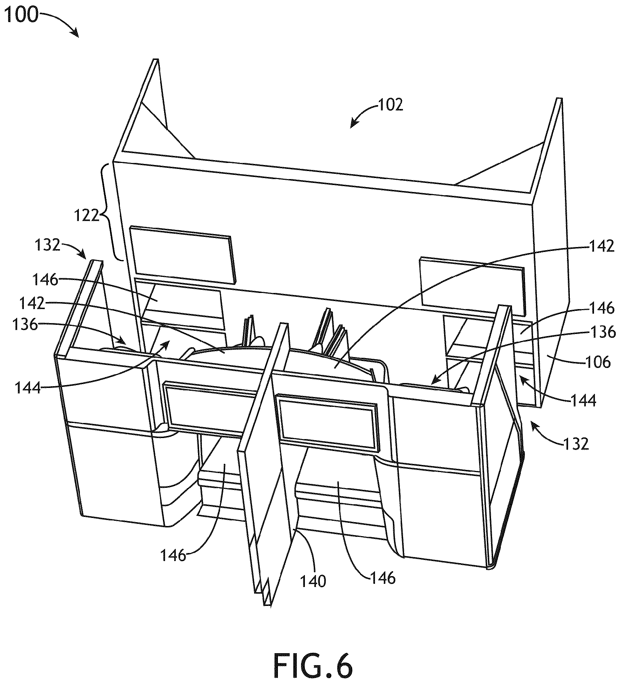

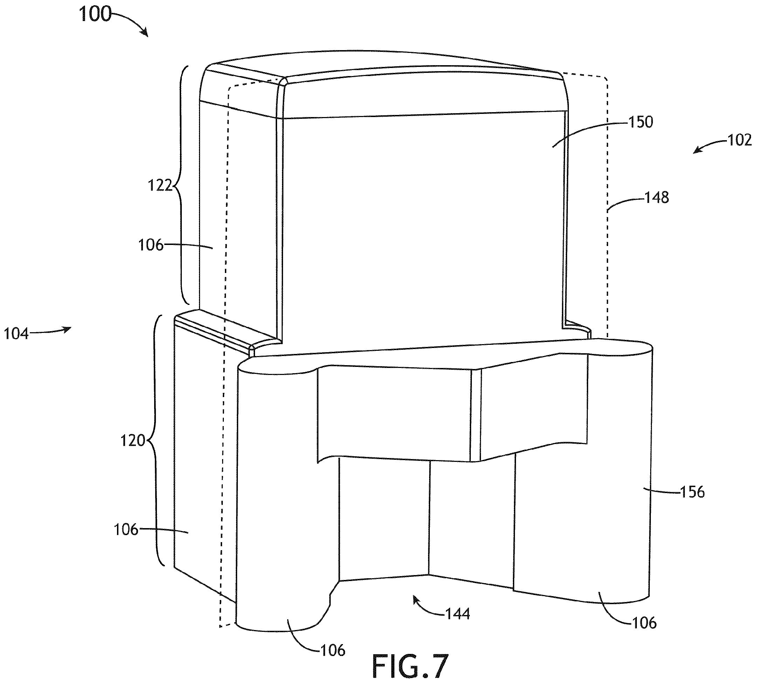

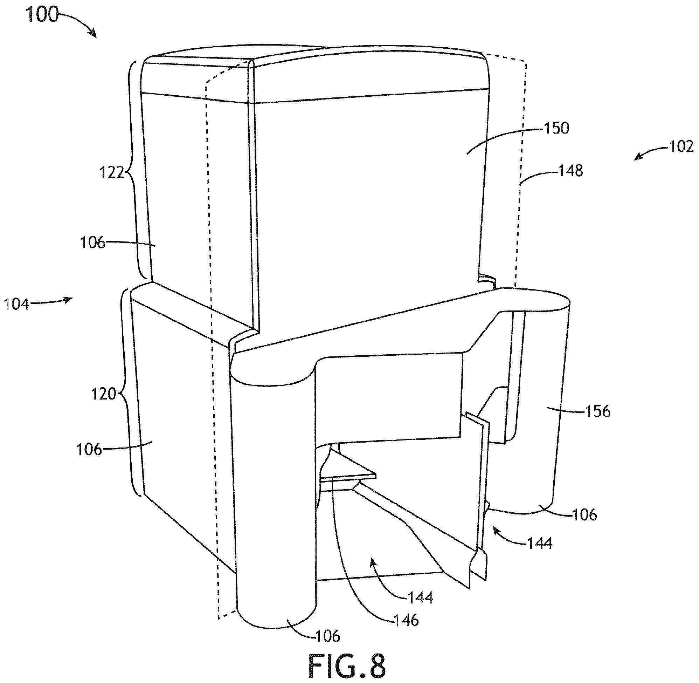

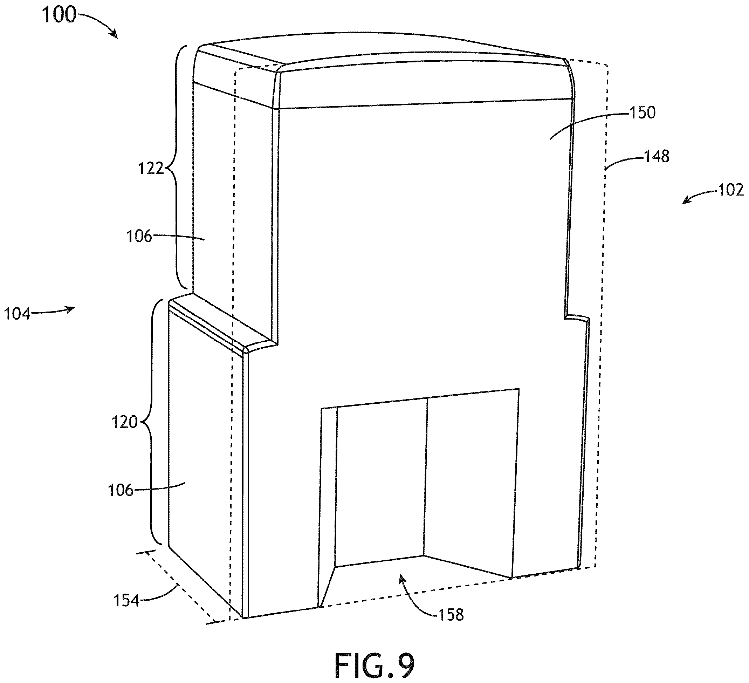

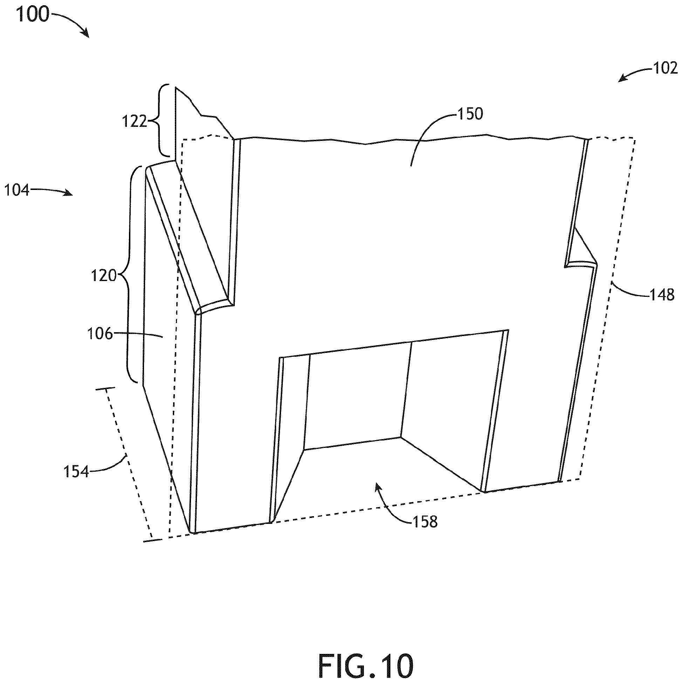

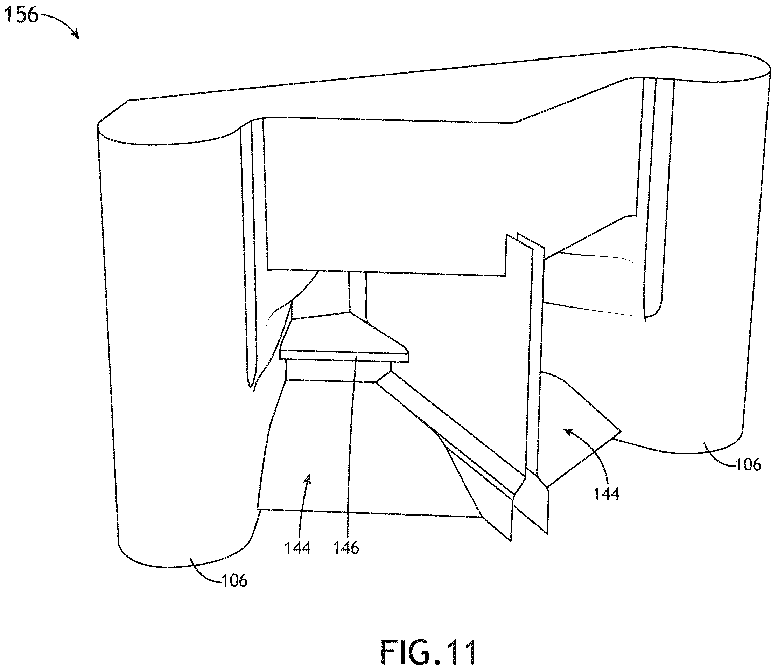

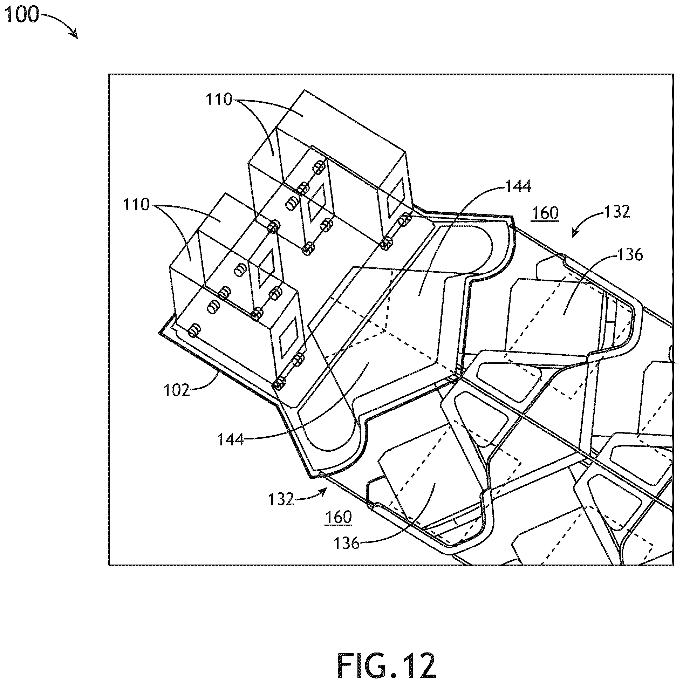

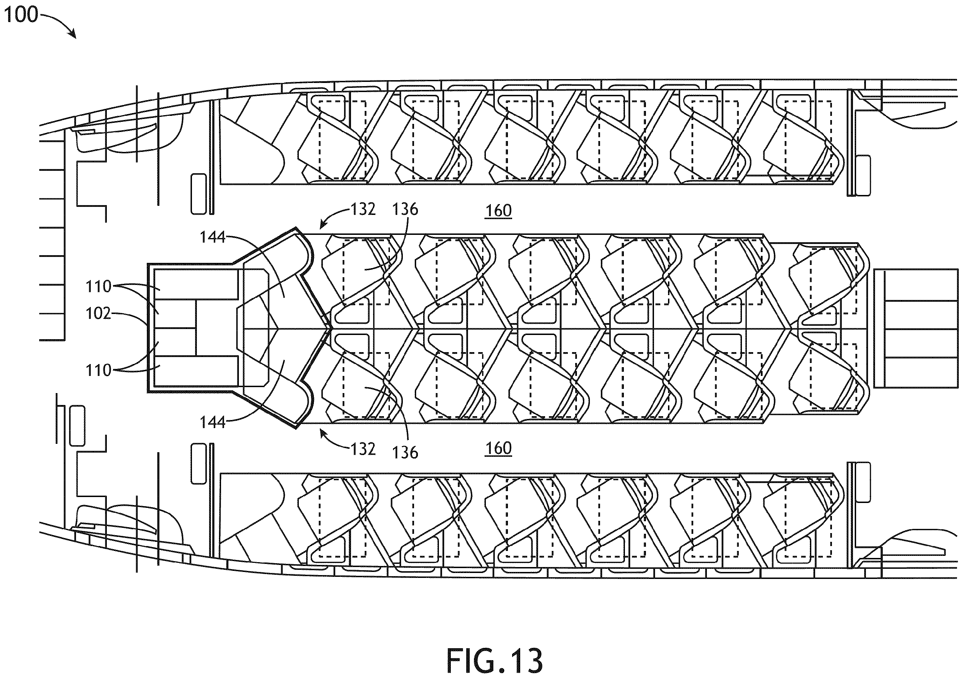

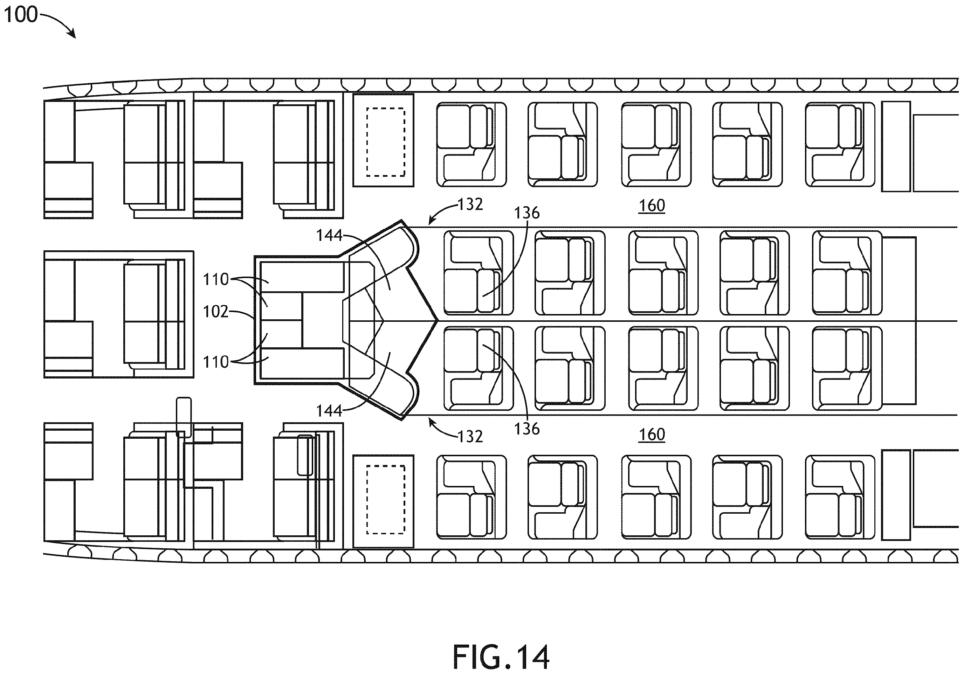

FIGS. 1-14 generally illustrate an aircraft interior structure including a footwell and an integrated galley, in accordance with one or more embodiments of the disclosure.

Aircraft cabin designs may include aircraft interior structures that are separately-constructed and separately-installed within the aircraft cabin. For example, the aircraft cabin may include an interior structure with one or more footwells and/or one or more ottomans for business class or first-class passenger compartments. By way of another example, the aircraft cabin may include an interior structure configured to operate as a galley around which crew members may prepare items for passengers and/or a galley stowage area in which crew members may stow or retrieve items.

The separate nature of the aircraft interior structures may result in a loss of valuable space (e.g., floor space, stowage space, or the like) within the aircraft cabin. However, aircraft cabin designs need to address competing interests for increased passenger seating, storage space, lavatories, galley spaces, and other structures and/or monuments. For example, arranging the layout of an aircraft cabin in order to increase passenger seating may require reducing an amount of room used for storage space, lavatories, galley spaces, and other structures and/or monuments. For instance, this reducing the amount of room used may include modifying the arrangement and/or design of components including, but not limited to, a galley, an aircraft lavatory, or other structures and/or monuments of the aircraft passenger cabin.

When modifying an aircraft cabin design to allow for a more compact arrangement, load-bearing/weight-bearing requirements must be met without losing the intended functionality of the structures and/or monuments in the aircraft cabin. For example, the structures and/or monuments in the aircraft cabin may need to be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

As such, it would be beneficial to provide aircraft interior structures with a footwell and an integrated galley. For example, a footwell may be integrated with an integrated galley into a single structure or monument to be installed within the aircraft cabin. The integrating of various aircraft interior components may reduce required installation space, resulting in an increase of available floor space for other aircraft interior structures and/or monuments while continuing to meet aviation guidelines and/or standards.

FIGS. 1-14 in general illustrate an aircraft cabin 100 and an aircraft interior structure 102 configured for the aircraft cabin 100. The aircraft interior structure 102 may be configured as a front row monument for the aircraft cabin 100. It is noted herein, however, that the aircraft interior structure 102 being configured as a front row monument is not limiting, and that the aircraft interior structure 102 may be placed at other locations within the aircraft cabin 100.

The aircraft interior structure 102 includes a galley section 104. The galley section 104 may be configured as a crew member preparation area section 104. It is noted herein that the terms "section 104," "galley section 104," and "crew member preparation area section 104" may be considered equivalent, for purposes of the present disclosure.

The aircraft interior structure 102 may include one or more support structures 106. For example, the one or more support structures 106 may include, but are not limited to, one or more frames, one or more sub-frames, one or more interior or exterior decor panels, or the like.

The galley section 104 includes one or more galley cart cavities 108. The one or more galley cart cavities 108 may be defined at least in part by the one or more support structures 106. The one or more galley cart cavities 108 are configured to receive (e.g., stow, house, or the like) one or more galley carts 110. For example, the one or more galley cart cavities 108 may have a depth 112 and be configured to receive a full-size galley cart 110. By way of another example, the one or more galley cart cavities 108 may have a reduced depth 114 and be configured to receive a reduced-size galley cart 110. For instance, the reduced-size galley cart 110 may include, but is not limited to, a half-size galley cart 110 (e.g., half-size as compared to a full-size galley cart 110). It is noted herein a particular galley cart cavity 108 may be configured to include a depth 112, may be configured to include a reduced depth 114, or may be configured to include sections with a depth 112 and sections with a reduced depth 114. In addition, it is noted herein the one or more galley cart cavities 108 may or may not be symmetric in depth. In general, the one or more galley cart cavities 108 may include one or more sections, each section having a depth corresponding to one or more galley carts 110 to be received and/or stowed within the one or more galley cart cavities 108.

The aircraft interior structure 102 may be configured to secure the one or more galley carts 110 within the one or more galley cart cavities 108 to meet aviation guidelines and/or standards (e.g., for use during select stages of flight). For example, the aircraft interior structure 102 may include one or more doors, one or more interlocking assemblies (e.g., one or more latches, or the like) with components on the aircraft interior structure 102, one or more interlocking assemblies (e.g., one or more tab-and-groove assemblies, or the like) with components on the aircraft interior structure 102 and the one or more galley carts 108, one or more raised surfaces (e.g., bumps or lips on a floor area within the one or more galley cart cavities 108, or the like).

The galley section 104 may include one or more stowage compartments 116. For example, the one or more stowage compartments 116 may include a door 118. It is noted herein, however, that the one or more stowage compartments 116 may be similar to a shelving unit without doors.

The galley section 104 includes a galley cart portion 120. The galley cart portion (120) includes the one or more galley cart cavities 108, the one or more stowage compartments 116, or the like.

The galley section 104 may include a galley insert portion 122. For example, the galley insert portion 122 may include one or more galley insert cavities 124. The one or more galley insert cavities 124 may be defined at least in part by the one or more support structures 106.

The one or more galley insert cavities 124 may include one or more surfaces 126. For example, the one or more surfaces 126 may include, but are not limited to, a countertop, a work surface, or other surface on which crew members may prepare food, drink, or the like for passengers. For instance, the surface 126 may include one or more tiers, where each tier is a select shape.

The one or more galley insert cavities 124 may be configured to receive one or more galley inserts 128. For example, the one or more galley inserts 128 may include, but are not limited to, one or more unit containers, coffeemakers, chillers, ovens, or the like. It is noted herein the one or more surfaces 126 may be configured to separate portions of a galley insert cavity 124. In addition, it is noted herein the one or more surfaces 126 may be configured as a shelf for the one or more galley inserts 128.

The aircraft interior structure 102 may be configured to secure the one or more galley inserts 128 within the one or more galley insert cavities 124 to meet aviation guidelines and/or standards (e.g., for use during select stages of flight). For example, the aircraft interior structure 102 may include one or more doors, one or more interlocking assemblies (e.g., one or more latches, or the like) with components on the aircraft interior structure 102, one or more interlocking assemblies (e.g., one or more tab-and-groove assemblies, or the like) with components on the aircraft interior structure 102 and the one or more galley inserts 128, one or more raised surfaces (e.g., bumps or lips on a surface 1126 within the one or more galley insert cavities 124, or the like).

Although embodiments of the disclosure illustrate the one or more galley cart cavities 108 being configured to receive one or more galley carts 110 and the one or more galley insert cavities 124 being configured to receive one or more galley inserts 128, it is noted herein the one or more galley cart cavities 108 and/or one or more galley insert cavities 124 may be configured for additional uses. For example, the one or more galley cart cavities 108 and/or one or more galley insert cavities 124 may be configured for crew member and/or passenger equipment stowage (e.g., emergency equipment). By way of another example, the one or more galley cart cavities 108 and/or one or more galley insert cavities 124 may be configured for auxiliary aircraft accessories configured to be installed within the aircraft cabin 100 at the request of a passenger (e.g., bassinets, tray tables, or the like). By way of another example, the one or more galley cart cavities 108 and/or one or more galley insert cavities 124 may be configured to stow crew member luggage, oversized passenger luggage (e.g., wheelchairs, strollers, car seats, or the like)), fixtures (e.g., plumbing fixtures, light fixtures, power fixtures, or the like), or some combination of the above. Therefore, the above description should not be interpreted as a limitation on the present disclosure but merely an illustration.

The galley section 104 may include one or more accessories configured to provide a visual and/or auditory output to crew members on the galley cart 110/galley insert 128 side or on the support structure 106 sidewalls of the galley section 104. For example, the one or more accessories may include, but are not limited to, one or more lights or lighted panels, one or more in-flight entertainment (IFE) devices, one or more speakers configured to provide media content separate from or accompanying the media content shown on the in-flight entertainment (IFE) devices, or the like.

The aircraft interior structure 102 includes a passenger seating section 130. The passenger seating section 130 is proximate to one or more passenger compartments 132. For example, the one or more passenger compartments 132 may be entirely separate (e.g., fully separated by privacy panels or divider panels). By way of another example, adjacent passenger compartments 132 may occupy a shared portion of the floor area of the aircraft cabin 100.

Although embodiments of the disclosure illustrate the galley section 104 as including the galley cart portion 120 and the galley insert portion 122, it is noted herein the galley section 104 may include a partition in place of the galley insert portion 122. For example, the partition may be a vertical or substantially-vertical wall configured to prevent access to the passenger compartment 132 from a floor area of the aircraft cabin 100 on the galley section 104 side. In addition, it is noted herein the galley insert portion 122 may operate as a partition between the passenger compartment 132 and the floor area of the aircraft cabin 100 on the galley section 104 side. Therefore, the above description should not be interpreted as a limitation on the scope of the disclosure but merely an illustration.

A passenger compartment 132 may include a privacy shell 134 with one or more privacy shell elements. The privacy shell 134 may include an opening within the one or more privacy shell elements into the passenger compartment 132, the opening configured to lead to an aircraft aisle of the aircraft cabin 100. The passenger compartment 132 may include a door for the opening. For example, the door may swing or slide into an open position against the one or more privacy shell elements. By way of another example, one or more privacy shell elements may be at least partially hollow, and the door may be slid into a cavity defined in the one or more privacy shell elements.

A passenger compartment 132 includes one or more aircraft seats 136 (e.g., business class or first-class passenger seats) positioned proximate to the aircraft interior structure 102. It noted herein the terms "aircraft seats" and "passenger seats" may be considered equivalent, for purposes of the disclosure.

In general, an aircraft seat 136 may be translatable (e.g., trackable or slidable). The aircraft seat 136 is rotatable about an axis cross-wise through the aircraft seat 136 into a position including, but not limited to, an upright or raised position, one or more lounge or reclined positions, and a lie-flat or bed position. For example, the aircraft seat 136 may transition directly between the upright position and the lie-flat or bed position. By way of another example, it is noted herein the aircraft seat 136 may transition through one or more reclined positions between the upright position and the lie-flat or bed position. By way of another example, the aircraft seat 136 may transition into one or more reclined positions in a motion separate from the transition between the upright position and the lie-flat or bed position. Therefore, the above description should not be interpreted as a limitation on the scope of the disclosure but merely an illustration.

The aircraft seat 136 may be rotatable about an axis (e.g., swivelable). The aircraft seat 136 may be fully positionable between the outer limits of motion as defined by the moveable components of the aircraft seat 136, one or more primary monuments 138, and/or one or more auxiliary monuments 140 of the passenger compartment 132. It is noted herein an upright or raised position may be considered a taxi, takeoff, or landing (TTOL) position during select stages of flight (though the upright or raised position is not limited to use during the select stages of flight as the TTOL position, but also may be used at any point during the flight), for purposes of the present disclosure. In addition, it is noted herein that any position that does not meet the above-defined requirements of the TTOL position may be considered a non-TTOL position, for purposes of the present disclosure. Further, it is noted herein the aircraft seat 136 may be actuatable (e.g., translatable and/or rotatable) from the TTOL position to a non-TTOL position, and/or vice versa. Further, it is noted herein the aircraft seat 136 may be capable of a fully upright or raised position, and that the TTOL position may have a more reclined seat back cushion and a more angled upward seat pan cushion as compared to the fully upright or raised position. Therefore, the above description should not be interpreted as a limitation on the present disclosure but merely an illustration.

The aircraft seat 136 may be configured to avoid contact with the one or more primary monuments 138 when transitioning between positions (e.g., between the upright or raised position and the lie-flat or bed position). The one or more primary monuments 138 may include or may be implemented as a divider panel or structure separating adjacent passenger compartments 132 and/or between a passenger compartment 132 from an open area within the aircraft cabin 100. For example, where the one or more primary monuments 138 are implemented as separators, the one or more primary monuments 138 may be configured to allow for the multiple passenger compartments 132 to be installed within the aircraft cabin 100 in a more compact arrangement. In this regard, the amount of floor area of the aircraft cabin 100 necessary for the one or more aircraft seats 136 may be reduced.

The one or more auxiliary monuments 140 may include, but are not limited to, a tray or table, a side stand, or the like. The aircraft seat 136 may be configured to avoid contact with the one or more auxiliary monuments 140 when transitioning between positions (e.g., between the upright or raised position and the lie-flat or bed position).

The auxiliary monument 140 may include a top surface, a bottom surface, and/or one or more side surfaces. For example, the auxiliary monument 140 may include a single continuous side surface where all corners are rounded. By way of another example, the auxiliary monument 140 may include up to an N number of side surfaces where the auxiliary monument 140 includes up to an N number of corners. The auxiliary monument 140 may be fixed in position. It is noted herein, however, that the auxiliary monument 140 may be actuatable (e.g., may extend a select distance from a stored position to an extended position proximate to a passenger, similar to an aircraft tray table).

The auxiliary monument 140 may be proximate to a different primary monument 138 used as a separator between adjacent passenger compartments 132 and/or between a passenger compartment 132 and an open area within the aircraft cabin 100. For example, the auxiliary monument 140 may be positioned above a primary monument 138. The auxiliary monument 140 may be integrated into the primary monument 138 used as a separator between adjacent aircraft seats 136 and/or between an aircraft seat 136 and an open area within the aircraft cabin 100. In this regard, the amount of floor area of the aircraft cabin 100 necessary for the one or more aircraft seats 136 may be reduced.

It is noted herein that at least some components (e.g., at least a portion of the privacy shell 134, a primary monument 138, an auxiliary monument 140, or the like) may conform to a portion of an aircraft seat 136. In this regard, the amount of floor area of the aircraft cabin 100 necessary for the one or more aircraft seats 136 may be reduced.

The passenger compartment 132 may include one or more storage compartments 142. The one or more storage compartments 142 may be positioned proximate to or integrated within the one or more privacy shell elements of the privacy shell 134, the one or more primary monuments 138, the one or more auxiliary monuments 140, or the like. The one or more storage compartments 142 may be coupled to and/or at least be partially inset in the one or more privacy shell elements of the privacy shell 134, the one or more primary monuments 138, the one or more auxiliary monuments 140, or the like.

A storage compartment 142 may be a storage compartment (e.g., a wardrobe) configured to receive long and/or large items (e.g., passenger amenities needing to be hung, carry-on luggage, or the like) that require an increased space and/or that a passenger may prefer to store in a substantially vertical or upright orientation.

A storage compartment 142 may be configured to receive and hold (e.g., contain, secure, or the like) one or more passenger amenities including, but not limited to, paper-printed materials (e.g., magazines, newspapers, pamphlets, or the like), select personal electronic devices (e.g., phones, tablets, phablets, laptops, music devices, digital video disc (DVD) players, handheld gaming consoles or devices, or the like), food products, drink products, or the like.

A storage compartment 142 may include one or more electronic connections for one or more passenger amenities such as, but not limited to, one or more charging ports, one or more charging cables, or the like.

A storage compartment 142 may include one or more electronic connections in communication with one or more components of the passenger compartment 132 such as, but not limited to, one or more display device connection ports, one or more display device connection cables, one or more audio output jacks (e.g., headphone jacks), one or more audio input jacks, or the like.

A storage compartment 142 may include one or more safety devices (e.g., air masks, personal floatation devices, or the like).

The passenger compartment 132 may include one or more electronics or electronic devices. For example, the one or more electronics or electronic devices may include, but are not limited to, one or more aircraft seat 136 actuation devices (e.g., assemblies, controls, actuators, and/or the like), one or more in-flight entertainment (IFE) devices, one or more speakers configured to provide media content separate from or accompanying the media content shown on the in-flight entertainment (IFE) devices, one or more lights, or the like.

The passenger seating section 130 includes one or more footwells 144 configured to be usable by one or more passengers in one or more aircraft seats 136 positioned proximate to the aircraft interior structure 102. The passenger seating section 130 may include one or more ottomans 146 positioned within the one or more footwells 144. For example, the one or more ottomans 146 may be fixed in place. By way of another example, the one or more ottomans 146 may be configured to transition between a first position and at least a second position. For instance, at least a portion of an ottoman 146 may be configured to translate, may be configured to rotate about an axis, or may be configured to translate and rotate about an axis.

An ottoman 146 may be usable by a passenger in an aircraft seat 136 positioned proximate to the aircraft interior structure 102 when the corresponding aircraft seat 136 is in a lie-flat or bed position. For example, the ottoman 146 may form a portion of a bed surface when the corresponding aircraft seat 136 is in the lie-flat or bed position. The ottoman 146 may be usable by a passenger in an aircraft seat 136 positioned proximate to the aircraft interior structure 102 when the corresponding aircraft seat 136 is in a reclined or lounge position.

The ottoman 146 may be positioned within a footwell 144 of the passenger seating section 130. For instance, one or more dimensions of the footwell 144 may be changed by transitioning the aircraft seat 136 between the upright or raised position, a lounge or reclined position, and the lie-flat or bed position. It is noted herein that a portion of the ottoman 146 may be actuatable (e.g., along a set of tracks or linear rails) to a position outside of the footwell 144.

The ottoman 146 may be configured to translate and/or rotate about an axis through a sidewall of the ottoman 146 to point a top surface to a passenger occupying the aircraft seat 136. For example, where the ottoman 146 may be configured to both translate and rotate, the ottoman 146 may be configured to independently rotate and/or translate. By way of another example, where the ottoman 146 may be configured to both translate and rotate, a rotation may prevent further translation until the ottoman 146 is returned to a select position and/or a translation may prevent further rotation until the ottoman 146 is returned to a select position.

It is noted herein, however, the aircraft seat 136 and/or the ottoman 146 may be limited to an upright or raised position and/or one or more lounge or reclined positions. In addition, it is noted herein the aircraft seat 136 may be the sole component forming a bed when the aircraft seat 136 is in a lie-flat or bed position. Therefore, the above description should not be interpreted as a limitation on the present disclosure but merely an illustration.

The passenger seating section 130 (e.g., the one or more footwells 144 and the one or more ottomans 146) may breach a vertical or substantially-vertical plane 148 defined by the aircraft interior structure 102. For example, the vertical or substantially-vertical plane 148 may be defined by a surface 150 of the aircraft interior structure 102, the surface 150 being proximate to and facing the one or more passenger compartments 132.

By breaching the vertical or substantially-vertical plane 148, at least a portion of the passenger seating section 130 (e.g., the one or more footwells 144 and the one or more ottomans 146) may be at least partially set within the galley cart portion 120. The one or more footwells 144 are partially surrounded by the one or more galley cart cavities 108. The one or more footwells 144 form a rear surface of one or more galley cart cavities 108 with the reduced depth 114 of the galley cart portion 120. In addition, the one or more footwells 144 is at least partially surrounded by one or more galley cart cavities 108 with the depth 112. In addition, by breaching the vertical or substantially-vertical plane 148, at least a portion of the passenger seating section 130 (e.g., the one or more footwells 144 and the one or more ottomans 146) may be positioned underneath the galley insert portion 122.

In this regard, at least a portion of the galley section 104 may be considered integrated within the aircraft interior structure 102, as the aircraft interior structure 102 includes the galley cart portion 120 and the galley insert portion 122 of the galley section 104. In addition, at least a portion of the passenger seating section 130 (e.g., the footwells 144 and/or the ottomans 146) may be considered integrated within the aircraft interior structure 102, as the passenger seating section 130 is positioned within the aircraft interior structure 102 proximate to the galley cart cavities 108 of the galley cart portion 120. It is noted herein that integrating the passenger seating section 130 with the galley section 104 may reduce the combined area required for the footprints of the passenger seating section 130 and the galley section 104, as compared to if the sections were separately-constructed for and/or separately-installed within the aircraft cabin 100. The aircraft interior structure 102 may be installed at locations within an aircraft cabin 100 to allow for additional improvement in the monument or structure layout within the aircraft cabin 100 (e.g., additional stowage, an additional row of passenger compartments 132 and/or aircraft seats 136, or the like).

The entirety of a particular footwell 144 may be defined within the passenger seating section 130 of the aircraft interior structure 102, such that the aircraft interior structure 102 may have a length 152. It is noted herein, however, the aircraft interior structure 102 may have a reduced length 154 in instances where the aircraft interior structure 102 is installed in locations within the aircraft cabin 100 having tighter or smaller dimensions.

Although embodiments of the disclosure illustrate the passenger seating section 130 being fully integrated within the aircraft interior structure 102, it is noted herein the passenger seating section 130 including the one or more footwells 144 may be a portion of an auxiliary aircraft interior structure 156 of the aircraft interior structure 102.

The auxiliary aircraft interior structure 156 may be formed from and/or may include the one or more support structures 106. The aircraft interior structure 102 may include an auxiliary cavity 158 accessible through the surface 150. The auxiliary aircraft interior structure 156 may include a surface configured to conform to the surface 150 defining the vertical or substantially-vertical plane 148 and facing the one or more passenger compartments 132. The auxiliary aircraft interior structure 156 may include a footwell portion corresponding to the one or more footwells 144 (and the one or more ottomans 146). The aircraft interior structure 102 may define the auxiliary cavity 158 and may be configured to receive the footwell portion of the auxiliary aircraft interior structure 156 to accommodate the footwell portion.

The auxiliary aircraft interior structure 156 may have a partial height as compared to the aircraft interior structure 102. Where the auxiliary aircraft interior structure 156 has a partial height, a portion of the aircraft interior structure 102 corresponding to a remainder or excess height may include interior or exterior décor panels, shelving units without doors, stowage compartments with doors, and/or in-flight entertainment devices (IEDs) proximate to the passenger seating section 130. It is noted herein, however, that the auxiliary aircraft interior structure 156 may be the full height of the aircraft interior structure 102.

In this regard, the reduced-depth aircraft interior structure 102 may be installed at locations within an aircraft cabin 100 where floor area is a premium and the one or more footwells 144 and/or the one or more ottomans 146 are not to be installed. In addition, the reduced-depth aircraft interior structure 102 may be installed at locations within an aircraft cabin 100 to allow for additional improvement in the monument or structure layout within the aircraft cabin 100 (e.g., additional stowage, an additional row of passenger compartments 132 and/or aircraft seats 136, or the like). Further, the separate nature of the aircraft interior structure 102 and the auxiliary aircraft interior structure 156 may allow for reduced fabrication time and/or cost.

It is noted herein the auxiliary aircraft interior structure 156 may be implemented to retrofit existing monuments or structures within an aircraft cabin 100 without requiring all or some of the of the aircraft interior structure 102 be installed within the aircraft cabin 100. Here, a footwell 144 and/or an ottoman 146 may be installed with the installation of the auxiliary aircraft interior structure 156, without needing an installed aircraft interior structure 102. Therefore, the above description should not be interpreted as a limitation on the present disclosure but merely an illustration.

The aircraft seats 136 may be set at an angle relative to a floor area 160 (e.g., where the floor area 160 is an aircraft aisle 160) and relative to the aircraft interior structure 102. For example, the aircraft seats 136 may be positioned proximate to the floor area 160 (e.g., the aircraft seats 136 may be separated by some distance), while the footwells 144 corresponding to the aircraft seats 136 may be positioned proximate to one another (e.g., either may be separated or shared). By way of another example, the aircraft seats 136 may be positioned proximate to one another (e.g., either may be separated or shared), while the footwells 144 corresponding to the aircraft seats 136 may be positioned proximate to the floor area 160 (e.g., the footwells 144 may be separated by some distance).

The aircraft seats 136 may be parallel to the floor area 160 (e.g., where the floor area 160 is an aircraft aisle 160) and directly face the galley section 104. For example, the aircraft seats 136 may be positioned proximate to one another (e.g., are center seats separated from the floor area 160 by some distance). For instance, portions of the passenger seating section 130 (e.g., the one or more footwells 144 and/or the one or more ottomans 146) corresponding to the aircraft seats 136 may be centered within the passenger seating section 130 of the aircraft interior structure 102 and positioned proximate to one another (e.g., either are in a separated space or are in a shared space). By way of another example, the aircraft seats 136 may be positioned proximate to the floor area 160 (e.g., are separated by some distance). For instance, the footwells 144 corresponding to the aircraft seats 136 may be separated by some distance and proximate to one or more exterior or outer support structures 106 of the aircraft interior structure 102. By way of another example, an aircraft seat 136 may be positioned near a center line of adjacent passenger compartments 132 and a second aircraft seat 136 may be positioned proximate to the floor area 160 (e.g., where the floor area 160 is an aircraft aisle 160), such that the aircraft seats 136 (and the passenger compartments 132) are not positioned symmetrically within the aircraft cabin 100.

It is noted herein the passenger seating section 130 may be configured to include one or more footwells 144 and one or more ottomans 146 for additional passenger compartments 132 positioned underneath the one or more aircraft seats 136, the one or more primary monuments 138, the one or more auxiliary monuments 140, and/or the one or more storage compartments 142 within the passenger seating section 130.

Although embodiments of the disclosure are directed to an aviation environment such as an aircraft cabin 100, it is noted herein the aircraft interior structure 102 including an integrated galley section 104 and a footwell 144 is not limited to the aviation environment and/or the aircraft components within the aviation environment. For example, the aircraft interior structure 102 including an integrated galley section 104 and a footwell 144 may be configured for any type of vehicle known in the art. For example, the vehicle may be any air, space, land, or water-based personal equipment or vehicle; any air, space, land, or water-based commercial equipment or vehicle; any air, space, land, or water-based military equipment or vehicle known in the art. By way of another example, the aircraft interior structure 102 including an integrated galley section 104 and a footwell 144 may be configured for commercial or industrial use in either a home or a business. Therefore, the above description should not be interpreted as a limitation on the present disclosure but merely an illustration.

Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. An aircraft interior structure (102), comprising:
a galley section (104), the galley section including a galley cart portion (120), the galley cart portion including at least one galley cart cavity (108) configured to receive one or more galley carts (110), the galley cart portion being accessible from a floor area of an aircraft cabin; and
a passenger seating section (130) proximate to a passenger compartment, the passenger compartment including an aircraft seat, the passenger seating section including a footwell (144), the footwell being at least partially inserted within the galley cart portion, the footwell being surrounded at least in part within the galley cart portion by the at least one galley cart cavity, the footwell corresponding to the aircraft seat (136) within the passenger compartment, the aircraft seat configured to form a bed surface when the aircraft seat is in a lie-flat position; the aircraft interior structure **characterized in that** the footwell (114) forms a rear surface of the at least one galley cart cavity having a reduced depth.

2. The aircraft interior structure of Claim 1, the one or more galley carts including a full-size galley cart (110), the at least one galley cart cavity having a depth configured to receive the full-size galley cart.

3. The aircraft interior structure of Claim 2, the footwell (144) configured to fit in a space within the galley cart portion at least partially defined by the depth configured to receive the full-size galley cart.

4. The aircraft interior structure of any preceding Claim, the one or more galley carts including a reduced-size galley cart (110), the at least one galley cart cavity having the reduced depth configured to receive the reduced-size galley cart.

5. The aircraft interior structure of Claim 4, the footwell (144) configured to fit in a space within the galley cart portion at least partially defined by the depth configured to receive the reduced-size galley cart.

6. The aircraft interior structure of Claim 1, the one or more galley carts including a full-size galley cart and a reduced-size galley cart, the at least one galley cart cavity including a first section having a depth configured to receive the full-size galley cart and a second section having a depth configured to receive the reduced-size galley cart.

7. The aircraft interior structure of Claim 6, the footwell (144) configured to fit in a space within the galley cart portion at least partially defined by the first section having the depth configured to receive the full-size galley cart and the second section having the depth configured to receive the reduced-size galley cart.

8. The aircraft interior structure of any preceding Claim, the galley section further including a galley insert portion (122), the galley insert portion including at least one galley insert cavity (124) configured to receive one or more galley inserts, the galley insert portion being accessible from the floor area of the aircraft cabin.

9. The aircraft interior structure of any preceding Claim, the passenger seating section including an ottoman (146) within the footwell (144), the ottoman corresponding to the aircraft seat within the passenger compartment, the ottoman and the aircraft seat configured to form the bed surface when the aircraft seat is in the lie-flat position.

10. The aircraft interior structure of any preceding Claim, the floor area including an aircraft aisle (160).

11. The aircraft interior structure of Claim 10, the aircraft seat being parallel to the aircraft aisle (160).

12. The aircraft interior structure of Claim 10, the aircraft seat being set at an angle relative to the aircraft aisle (160).

13. The aircraft interior structure of Claim 10, 11, or 12, further comprising:
a plurality of support structures (106), the plurality of support structures being configured to define at least one of the galley section or the passenger seating section, the footwell being proximate to the aircraft aisle and at least one exterior support structure of the plurality of support structures.

14. The aircraft interior structure of any preceding Claim, the footwell being arranged in a center position within the passenger seating section of the aircraft interior structure.

15. The aircraft interior structure (102) according to claim 1, comprising:
an auxiliary aircraft interior structure (156) proximate to the passenger compartment, a surface of the auxiliary aircraft interior structure configured to conform to an auxiliary surface of the galley section facing the passenger compartment (132); the galley section including an auxiliary cavity (158) at least partially within the galley section, the galley section including the auxiliary surface facing the passenger compartment, the auxiliary cavity accessible via the auxiliary surface.

## Patentansprüche

1. Innenstruktur eines Flugzeuges (102), Folgendes umfassend:
einen Bordküchenabschnitt (104), wobei der Bordküchenabschnitt einen Bordküchenwagenabschnitt (120) beinhaltet, wobei der Bordküchenwagenabschnitt mindestens einen Bordküchenwagenhohlraum (108) beinhaltet, der dazu konfiguriert ist, einen oder mehrere Bordküchenwagen (110) aufzunehmen, wobei der Bordküchenwagenabschnitt von einem Bodenbereich einer Flugzeugkabine aus zugänglich ist; und
einen Passagiersitzabschnitt (130) in der Nähe eines Passagierraums, wobei der Passagierraum einen Flugzeugsitz beinhaltet, wobei der Passagiersitzabschnitt einen Fußraum (144) beinhaltet, wobei der Fußraum mindestens teilweise in den Bordküchenwagenabschnitt eingebaut ist, wobei der Fußraum mindestens teilweise innerhalb des Bordküchenwagenabschnitts von dem mindestens einen Bordküchenwagenhohlraum umgeben ist, wobei der Fußraum dem Flugzeugsitz (136) innerhalb des Passagierraums entspricht, wobei der Flugzeugsitz dazu konfiguriert ist, eine Liegefläche zu bilden, wenn der Flugzeugsitz in einer Flachliegeposition ist; wobei die Flugzeuginnenstruktur **dadurch gekennzeichnet ist, dass** der Fußraum (114) eine Rückfläche des mindestens einen Bordküchenwagenhohlraums bildet, der eine verringerte Tiefe aufweist.

2. Innenstruktur eines Flugzeuges nach Anspruch 1, wobei der eine oder die mehreren Bordküchenwagen einen Bordküchenwagen (110) mit voller Größe beinhalten, wobei der mindestens eine Bordküchenwagenhohlraum eine Tiefe aufweist, die dazu konfiguriert ist, den Bordküchenwagen mit voller Größe aufzunehmen.

3. Innenstruktur eines Flugzeuges nach Anspruch 2, wobei der Fußraum (144) dazu konfiguriert ist, in einen Raum innerhalb des Bordküchenwagenabschnitts zu passen, der mindestens teilweise durch die Tiefe definiert ist, die dazu konfiguriert ist, den Bordküchenwagen mit voller Größe aufzunehmen.

4. Innenstruktur eines Flugzeuges nach einem vorhergehenden Anspruch, wobei der eine oder die mehreren Bordküchenwagen einen Bordküchenwagen (110) mit verringerter Größe beinhalten, wobei der mindestens eine Bordküchenwagenhohlraum, der die verringerte Tiefe aufweist, dazu konfiguriert ist, den Bordküchenwagen mit verringerter Größe aufzunehmen.

5. Innenstruktur eines Flugzeuges nach Anspruch 4, wobei der Fußraum (144) dazu konfiguriert ist, in einen Raum innerhalb des Bordküchenwagenabschnitts zu passen, der mindestens teilweise durch die Tiefe definiert ist, die dazu konfiguriert ist, den Bordküchenwagen mit verringerter Größe aufzunehmen.

6. Innenstruktur eines Flugzeuges nach Anspruch 1, wobei der eine oder die mehreren Bordküchenwagen einen Bordküchenwagen mit voller Größe und einen Bordküchenwagen mit verringerter Größe beinhalten, wobei der mindestens eine Bordküchenwagenhohlraum einen ersten Abschnitt mit einer Tiefe, die dazu konfiguriert ist, den Bordküchenwagen mit voller Größe aufzunehmen, und einen zweiten Abschnitt mit einer Tiefe beinhaltet, die dazu konfiguriert ist, den Bordküchenwagen mit verringerter Größe aufzunehmen.

7. Innenstruktur eines Flugzeuges nach Anspruch 6, wobei der Fußraum (144) dazu konfiguriert ist, in einen Raum innerhalb des Bordküchenwagenabschnitts zu passen, der mindestens teilweise dadurch definiert ist, dass der erste Abschnitt die Tiefe aufweist, die dazu konfiguriert ist, den Bordküchenwagen in voller Größe aufzunehmen, und der zweite Abschnitt die Tiefe aufweist, die dazu konfiguriert ist, den Bordküchenwagen mit verringerter Größe aufzunehmen.

8. Innenstruktur eines Flugzeuges nach einem vorhergehenden Anspruch, wobei der Bordküchenabschnitt ferner einen Bordkücheneinsatzabschnitt (122) beinhaltet, wobei der Bordkücheneinsatzabschnitt mindestens einen Bordkücheneinsatzhohlraum (124) beinhaltet, der dazu konfiguriert ist, einen oder mehrere Bordkücheneinsätze aufzunehmen, wobei der Bordkücheneinsatzabschnitt vom Bodenbereich der Flugzeugkabine aus zugänglich ist.

9. Innenstruktur eines Flugzeuges nach einem vorhergehenden Anspruch, wobei der Passagiersitzabschnitt einen Polsterhocker (146) innerhalb des Fußraums (144) beinhaltet, wobei der Polsterhocker dem Flugzeugsitz innerhalb des Passagierraums entspricht, wobei der Polsterhocker und der Flugzeugsitz dazu konfiguriert sind, die Liegefläche zu bilden, wenn sich der Flugzeugsitz in der Flachliegeposition befindet.

10. Innenstruktur eines Flugzeuges nach einem vorhergehenden Anspruch, wobei der Bodenbereich einen Flugzeuggang (160) beinhaltet.

11. Innenstruktur eines Flugzeuges nach Anspruch 10, wobei der Flugzeugsitz parallel zum Flugzeuggang (160) ist.

12. Innenstruktur eines Flugzeuges nach Anspruch 10, wobei der Flugzeugsitz in einem Winkel relativ zum Flugzeuggang (160) eingebaut ist.

13. Innenstruktur eines Flugzeuges nach Anspruch 10, 11 oder 12, ferner Folgendes umfassend:
eine Vielzahl von Stützstrukturen (106), wobei die Vielzahl von Stützstrukturen dazu konfiguriert ist, mindestens einen von dem Bordküchenabschnitt oder dem Passagiersitzabschnitt zu definieren, wobei sich der Fußraum in der Nähe des Flugzeuggangs und mindestens einer äußeren Stützstruktur der Vielzahl von Stützstrukturen befindet.

14. Innenstruktur eines Flugzeuges nach einem vorhergehenden Anspruch, wobei der Fußraum in einer mittleren Position innerhalb des Passagiersitzabschnitts der Innenstruktur eines Flugzeuges angeordnet ist.

15. Innenstruktur eines Flugzeuges (102) nach Anspruch 1, Folgendes umfassend:
eine Hilfsinnenstruktur eines Flugzeugs (156) in der Nähe des Passagierraums, wobei eine Oberfläche der Hilfsinnenstruktur eines Flugzeugs dazu konfiguriert ist, sich an eine Hilfsoberfläche des Bordküchenabschnitts anzupassen, die dem Passagierraum (132) zugewandt ist; wobei der Bordküchenabschnitt einen Hilfshohlraum (158) mindestens teilweise innerhalb des Bordküchenabschnitts beinhaltet, wobei der Bordküchenabschnitt die Hilfsfläche beinhaltet, die dem Passagierraum zugewandt ist, wobei der Hilfshohlraum über die Hilfsoberfläche zugänglich ist.

## Revendications

1. Structure intérieure d'aéronef (102), comprenant :
une section de cuisine (104), la section de cuisine comportant une partie de chariot de cuisine (120), la partie de chariot de cuisine comportant au moins une cavité de chariot de cuisine (108) configurée pour recevoir un ou plusieurs chariots de cuisine (110), la partie de chariot de cuisine étant accessible depuis une surface au sol d'une cabine d'aéronef ; et
une section de sièges passagers (130) à proximité d'un compartiment passagers, le compartiment passagers comportant un siège d'aéronef, la section de sièges passagers comportant un espace de pieds (144), l'espace de pieds étant au moins partiellement inséré dans la partie de chariot de cuisine, l'espace de pieds étant entouré au moins en partie à l'intérieur de la partie de chariot de cuisine par l'au moins une cavité de chariot de cuisine, l'espace de pieds correspondant au siège d'aéronef (136) à l'intérieur du compartiment passagers, le siège d'aéronef étant configuré pour former une surface de lit lorsque le siège d'aéronef est dans une position allongée-à plat ; la structure intérieure d'aéronef étant **caractérisée en ce que** l'espace de pieds (114) forme une surface arrière de l'au moins une cavité de chariot de cuisine ayant une profondeur réduite.

2. Structure intérieure d'aéronef selon la revendication 1, les un ou plusieurs chariots de cuisine comportant un chariot de cuisine pleine grandeur (110), l'au moins une cavité de chariot de cuisine ayant une profondeur configurée pour recevoir le chariot de cuisine pleine grandeur.

3. Structure intérieure d'aéronef selon la revendication 2, l'espace de pieds (144) étant configuré pour s'adapter dans un espace à l'intérieur de la partie de chariot de cuisine au moins partiellement défini par la profondeur configurée pour recevoir le chariot de cuisine pleine grandeur.

4. Structure intérieure d'aéronef selon une quelconque revendication précédente, les un ou plusieurs chariots de cuisine comportant un chariot de cuisine de taille réduite (110), l'au moins une cavité de chariot de cuisine ayant la profondeur réduite configurée pour recevoir le chariot de cuisine de taille réduite.

5. Structure intérieure d'aéronef selon la revendication 4, l'espace de pieds (144) étant configuré pour s'adapter dans un espace à l'intérieur de la partie de chariot de cuisine au moins partiellement défini par la profondeur configurée pour recevoir le chariot de cuisine de taille réduite.

6. Structure intérieure d'aéronef selon la revendication 1, les un ou plusieurs chariots de cuisine comportant un chariot de cuisine pleine grandeur et un chariot de cuisine de taille réduite, l'au moins une cavité de chariot de cuisine comportant une première section ayant une profondeur configurée pour recevoir le chariot de cuisine pleine grandeur et une seconde section ayant une profondeur configurée pour recevoir le chariot de cuisine de taille réduite.

7. Structure intérieure d'aéronef selon la revendication 6, l'espace de pieds (144) étant configuré pour s'adapter dans un espace à l'intérieur de la partie de chariot de cuisine au moins partiellement défini par la première section ayant la profondeur configurée pour recevoir le chariot de cuisine pleine grandeur et la seconde section ayant la profondeur configurée pour recevoir le chariot de cuisine de taille réduite.

8. Structure intérieure d'aéronef selon une quelconque revendication précédente, la section de cuisine comportant en outre une partie d'insert de cuisine (122), la partie d'insert de cuisine comportant au moins une cavité d'insert de cuisine (124) configurée pour recevoir un ou plusieurs inserts de cuisine, la partie d'insert de cuisine étant accessible depuis la surface au sol de la cabine d'aéronef.

9. Structure intérieure d'aéronef selon une quelconque revendication précédente, la section de sièges passagers comportant une ottomane (146) dans l'espace de pieds (144), l'ottomane correspondant au siège d'aéronef dans le compartiment passagers, l'ottomane et le siège d'aéronef étant configurés pour former la surface de lit lorsque le siège d'aéronef est en position allongée-à plat.

10. Structure intérieure d'aéronef selon une quelconque revendication précédente, la surface au sol comportant un couloir d'aéronef (160).

11. Structure intérieure d'aéronef selon la revendication 10, le siège d'aéronef étant parallèle au couloir d'aéronef (160).

12. Structure intérieure d'aéronef selon la revendication 10, le siège d'aéronef étant placé à un angle par rapport au couloir d'aéronef (160).

13. Structure intérieure d'aéronef selon la revendication 10, 11 ou 12, comprenant en outre :
une pluralité de structures de support (106), la pluralité de structures de support étant configurée pour définir au moins l'une parmi la section de cuisine ou la section de sièges passagers, l'espace de pieds étant à proximité du couloir de l'aéronef et d'au moins une structure de support extérieure de la pluralité de structures de support.

14. Structure intérieure d'aéronef selon une quelconque revendication précédente, l'espace de pieds étant agencé dans une position centrale à l'intérieur de la section de sièges passagers de la structure intérieure d'aéronef.

15. Structure intérieure d'aéronef (102) selon la revendication 1, comprenant :
une structure intérieure d'aéronef auxiliaire (156) à proximité du compartiment passagers, une surface de la structure intérieure d'aéronef auxiliaire étant configurée pour se conformer à une surface auxiliaire de la section de cuisine faisant face au compartiment passagers (132) ; la section de cuisine comportant une cavité auxiliaire (158) au moins partiellement à l'intérieur de la section de cuisine, la section de cuisine comportant la surface auxiliaire faisant face au compartiment passagers, la cavité auxiliaire étant accessible via la surface auxiliaire.
